Europäisches Patentamt

European Patent Office

Office européen des brevets

(19)

(11) Publication number: **0 414 648 A1**

# EUROPEAN PATENT APPLICATION

(21) Application number: **90830351.4**

(22) Date of filing: **27.07.90**

(51) Int. Cl.5: **C02F 7/00, F03D 9/00**

(30) Priority: **21.08.89 IT 8497489**

(43) Date of publication of application:
**27.02.91 Bulletin 91/09**

(84) Designated Contracting States:
**AT BE CH DE DK ES FR GB GR IT LI LU NL SE**

(71) Applicant: **CABLE LINK s.r.l.**
**Via Monte Zebio No. 30**
**I-00195 Rome(IT)**

(72) Inventor: **Gazzola, Giovanni Andrea**
**Via Pineta Sacchetti 187**
**I-00168 Rome(IT)**

(74) Representative: **Iannone, Carlo Luigi et al**
**Ing. Barzanò & Zanardo Roma S.p.A. Via**
**Piemonte, 26**
**I-00187 Roma(IT)**

(54) Wind or wind-photovoltaic power operated oxygenizing device for oxygenizing water.

(57) The present invention relates to a wind and/or wind-photovoltaic power operated oxygenizing device for oxygenizing water, which device comprises a floating structure (2) upon which at least one aerogenerator (5; 15) is supported; possibly, photovoltaic cells (18); a device (6; 21) for pumping air drawn from the atmosphere towards the sea-bottom, operated by the wind-photovoltaic power; and means (11) for anchoring the oxygenizing device to the sea-bottom.

FIG. 2

EP 0 414 648 A1

# WIND OR WIND-PHOTOVOLTAIC POWER OPERATED OXYGENIZING DEVICE FOR OXYGENIZING WATER

The present invention relates to a wind or windphotovoltaic power oxygenizing device for oxygenizing water.

In particular, the present invention suggests an economically advantageous solution to the problems of oxygen depletion of stagnant water or of water that otherwise lacks aeration owing to various environmental conditions, more o less associated with pollution agents.

Technology affords several solutions for mechanically stirring water in order to oxygenize the same, or for letting directly air in the depth, against the problem of the scarcity of oxygen in water, a phenomenon that sometimes is of macroscopic proportions, as in the actual instance of Adriatic sea.

The main object of the present invention is to provide a device that constitutes an effective source to oxygenize polluted water

According to the present invention, this result is obtained by suggesting a wind or wind-photovoltaic power oxygenizing device in which a device for pumping air towards the sea-bottom is operated by means of a wind-like power, produced by a suitable generator and/or by photovoltaic cells, provided on a proper floating support base anchored to the sea-bottom.

It is therefore a specific object of the present invention a device for oxygenizing water, which device comprises a floating structure upon which at least one aerogenerator is supported; a device for pumping air drawn by the atmosphere towards the sea-bottom, operated by the power produced by said aerogenerator; and means for anchoring the oxygenizing device to the sea-bottom.

In a first embodiment of the oxygenizing device according to the present invention, said aerogenerator operates, by mechanical transmission, the pumping device directly.

In this case, the aerogenerator will be preferably of the low speed and high mechanical efficiency kind, e.g. a rotor of the type "Savonius", and preferably the pumping device will consist of a gear pump.

According to a further embodiment of the present invention, the energy produced by the aerogenerator will be stored in batteries that supply said pumping device.

Preferably, in this case, the aerogenerator will be a high speed generator, of the type DARRIEUS or a cyclone and the pumping device will consist of a fast air flux pump or of a compressor or of a pneumatic turbine or the like.

In a third embodiment of the oxygenizing device according to the present invention, photovoltaic panels may be provided, whose produced energy is stored in batteries, which are the same as those provided in the second embodiment or provided purposely, in case of combination with the first embodiment, that thus supply said pumping device.

In all the embodiments of the oxygenizing device according to the present invention disclosed heretofore a current generator may be provided.

Again according to the present invention, said floating structure, preferably, will consist of three floating members, arranged at the vertices of an equilateral triangle, that support a structure for supporting the various components.

According to the present invention, a drift member, for stabilizing the device, and a ballast member may be provided.

The oxygenizing device according to the present invention may also be provided with signalling lights, with an anemometer and with other complementary devices.

Moreover, a net for protecting the whole device may be provided.

The present invention will be now disclosed according to its preferred embodiments with particular reference to the figures of the enclosed drawings in which:

Figure 1 is a perspective view of an oxygenizing device of the wind power operated type according to the present invention; and

Figure 2 is a schematic exploded view of an oxygenizing device of the wind or wind-photovoltaic power operated type according to the present invention.

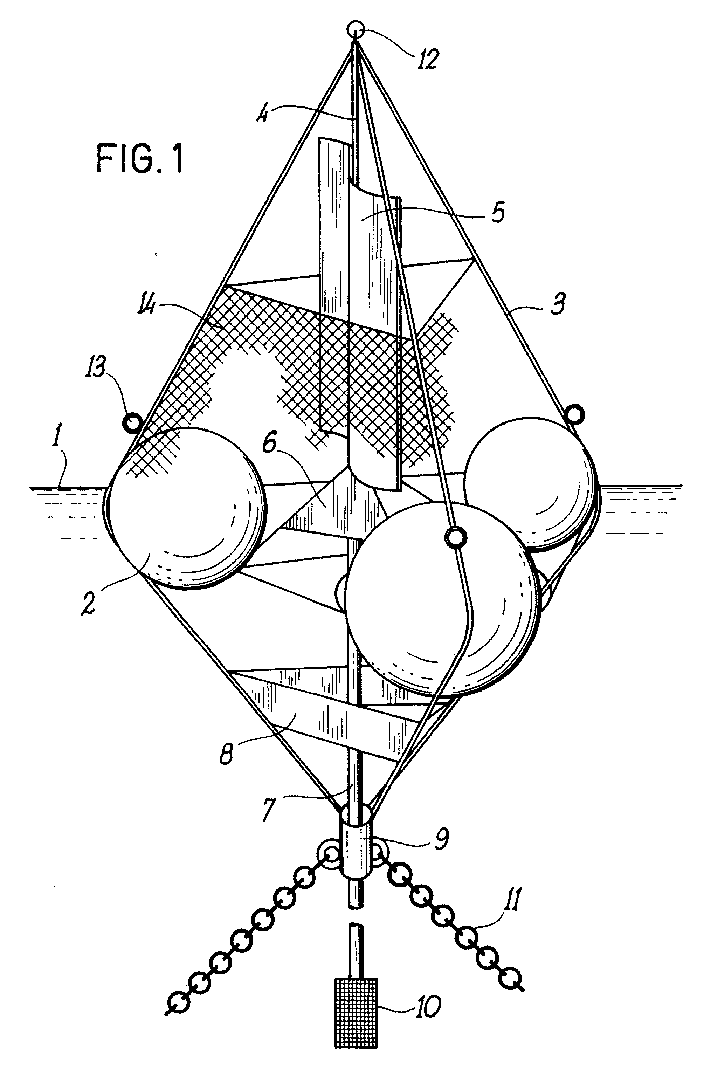

Observing now Figure 1, the reference number 1 denotes schematically the water surface on which the floating members 2 lie, while the reference number 3 denotes the frame structure of the device.

The axis of the wind operated rotor 5, which in this case has a Savonius-like configuration, is indicated with the number 4. In the pyramidal container 6, the air pump is housed, operated by the motion of the rotor 5. The air driven by the pump (or positive displacement blower, turbine or the life), is conveyed into the tube 7 from which it reaches the submerged delivery device 10, realized at spouts or of a porous material to split the flux in a plurality of bubblelets that facilitates its dissolution in water.

The submerged portion of the device also comprises the hydrostatic drift 8 that has the function of counteracting the sudden wind gusts, as well as of stabilizing the assembly against wave motion.

With the reference number 9 the ring member that acts as a ballast of the structure, insuring the vertical tendency of the latter, is indicated; to said member the anchoring chains 11 are fastened. A night-signalling light 12 is provided above the structure 3, while the side lights 13 are provided laterally: said safety devices (12, 13) are supplied by batteries housed in the container of the pump 6, kept in a constant charge state by a dynamo associated with the motion of the drive shaft. A broken view of the protection net that surrounds the device, to prevent small watercrafts or bathers from coming into contact with the rotor, is shown at 14.

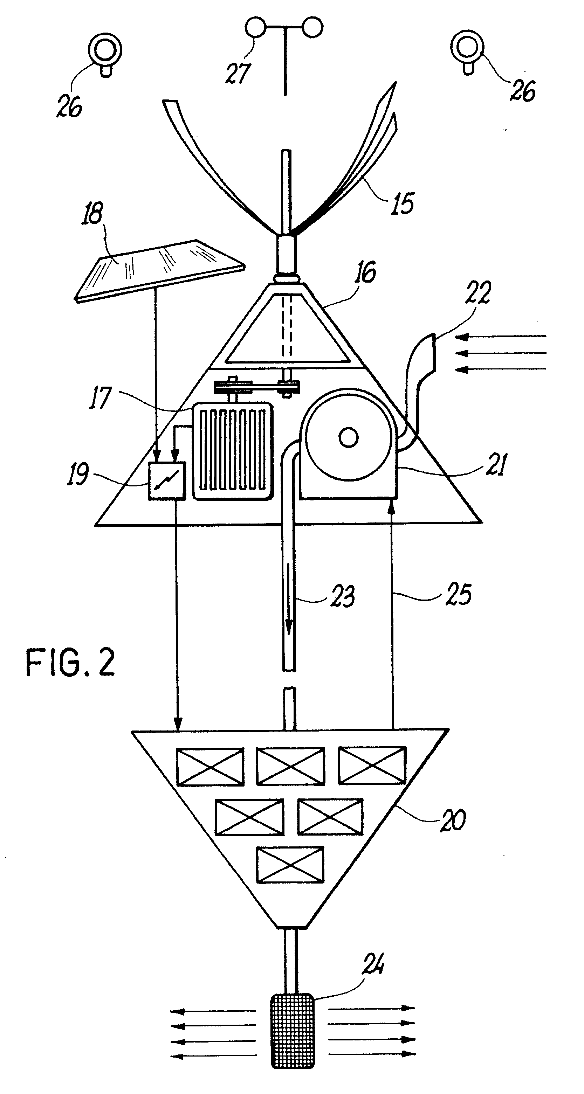

In Figure 2, in which the representation of the floating and support structure has been omitted, in that it may be similar to that already disclosed in Figure 1, a schematic is shown of a wind and photovoltaic power operated oxygenizing device.

In this embodiment a high speed wind operated rotor 15 is provided, endowed with a control and starting unit 16, which operates a generator 17.

Photovoltaic panels 18 are also provided (one only of them is represented in the figure) electrically connected, as well as the generator 17, to an electrical box 19.

From the electrical box 19, the power output from the rotor 15 and from the panels 18 is fed by the batteries 20.

The oxygenizing device according to the present invention and illustrated in Figure 2 also provides a compressor 21 endowed with an air suction opening 22 and connected, through a forced air tube 23, to a distributing device 24 which nebulizes the air pushed by the compressor 21 to the sea-bottom.

The batteries 20 feed, through the electric line 25, the compressor 21, the control unit 16 of the rotor, the signalling lights 26 and the remaining parts that have been provided.

Moreover, an anemometer 27 is provided on the upper side on the structure of the oxygenizing device.

## Claims

1. Water oxygenizing device, characterized in that it comprises a floating structure upon which at least one aerogenerator is supported; a device for pumping the air drawn by the atmosphere towards the sea-bottom, operated by the power generated by said aero-generator; and means for anchoring the oxygenizing device to the sea-bottom.

2. Oxygenizing device according to Claim 1, characterized in that said aerogenerator directly operates, by mechanical transmission, the air pumping device.

3. Oxygenizing device according to Claim 2, characterized in that said aerogenerator is of the low speed and high mechanical efficiency, vertical axis type, and in that the pumping device consists of a gear pump.

4. Oxygenizing device according to Claim 1, characterized in that the power produced by said aerogenerator is stored in batteries that feed said air pumping device.

5. Oxygenizing device according to Claim 4, characterized in that said aerogenerator is a high speed generator, of the type Darrieus and cyclone, and in that the pumping device consists of a fast air flux pump or of a compressor or of a pneumatic turbine.

6. Oxygenizing device according to any one of the preceding claims, characterized in that photovoltaic panels are provided, whose produced power is stored in batteries.

7. Oxygenizing device according to any one of the preceding claims, characterized in that a current generator is provided.

8. Oxygenizing device according to any one of the preceding claims, characterized in that said floating structure consists of three floating meters, arranged at the vertices of an equilateral triangle, that support a structure for supporting the various components.

9. Oxygenizing device according to any one of the preceding claims, characterized in that a drift member is provided.

10. Oxygenizing device according to any one of the preceding claims, characterized in that a ballast member is provided.

11. Oxygenizing device according to any one of the preceding claims, characterized in that it is endowed with signalling lights, with an anemometer and with other complementary devices.

12. Oxygenizing device according to any one of the preceding claims, characterized in that a protection net is provided.

FIG.1

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | PATENT ABSTRACTS OF JAPAN vol. 10, no. 185 (C-357)(2241) 27 June 1986, & JP-A-61 35896 (FUTOSHI OKI) 20 February 86, * the whole document * | 1-3,10,11 | C 02 F 7/00<br>F 03 D 9/00 |
| Y | DE-A-3 424 153 (MTI) * page 4, line 20 - page 5, line 5 * * page 7, line 6 - page 8, line 8; figure 1 * | 1-3,10,11 | |
| A | DE-A-2 823 952 (J.KRAMPITZ) * page 7, lines 5 - 30 * * claims 1-3 * | 1-4 | |
| A | US-A-4 553 037 (S.E.VEAZEY) * column 1, line 33 - column 2, line 17 * | 1,3-6 | |
| A | PATENT ABSTRACTS OF JAPAN vol. 11, no. 71 (M-567)(2518) 04 March 1987, & JP-A-61 226572 (HITACHI ZOSEN CORP.) 08 October 1986, * the whole document * | 1,2,7 | |
| | | | **TECHNICAL FIELDS SEARCHED (Int. Cl.5)**<br><br>C 02 F<br>F 03 D<br>F 03 D |

The present search report has been drawn up for all claims

| Place of search | Date of completion of search | Examiner |
|---|---|---|
| The Hague | 30 November 90 | GONZALEZ ARIAS M.L. |